# FASCICULE DE BREVET EUROPEEN

(11) **EP 0 629 579 B1**
(45) Date de publication et mention de la délivrance du brevet: **22.04.1998**
(21) Numéro de dépôt: 94401333.3
(22) Date de dépôt: 14.06.1994
(51) Int. Cl.: C01B 25/01, G21F 9/34

(54) **Procédé de traitement d'apatites naturelles en vue de les utiliser pour le stockage d'éléments combustible irradiés**
Verfahren zur Behandlung von natürlichen Apatiten zum Lagern von bestrahlten Brennelementen
Process for the treatment of natural apatites for storing spent fuel elements

(30) Priorité: 16.06.1993 FR 9307265
(43) Date de publication de la demande: 21.12.1994
(73) Titulaire: COMMISSARIAT A L'ENERGIE ATOMIQUE, 75015 Paris (FR)
(72) Inventeur: Carpena, Joelle, F-13490 Jouques (FR); Lacout, Jean-Louis, F-31240 Toulouse (FR)
(74) Mandataire: Des Termes, Monique

(56) Documents cités:
- US-A- 4 181 703
- CHEMICAL ABSTRACTS, vol. 86, no. 1, 3 Janvier 1977, Columbus, Ohio, US; abstract no. 4142w, KATO YOSHITO, FUJITA TAKAO 'Treatment of carbonate apatite' page 368 ;colonne G ;
- CHEMICAL ABSTRACTS, vol. 100, no. 26, 25 Juin 1984, Columbus, Ohio, US; abstract no. 212426b, TREUSHCHENKO & AL. 'Selective extraction of phosphates and carbonates from phosphate ores of the Kingisepp deposit using sulfuric acid' page 137 ;colonne G ;
- CONDITIONNING OF RADIOACTIVE WASTES FOR STORAGE AND DISPOSAL. PROCEEDINGS OF AN INTERNATIONAL SYMPOSIUM, UTRECHT, 21-25 JUNE 1982 pages 245 - 251 W. HEBEL & G. COTTONE 'CEC research activities into the immobilization of volatile radionuclides from reprocessing'
- TRANSACTIONS OF THE AMERICAN NUCLEAR SOCIETY, 25 TH ANNUAL MEETING, JUNE 3-7 1979, vol.32, PEACHTREE PLAZA, ATLANTA, GEORGIA pages 168 - 169 KRAJEWSKI & AL. 'Mineral-contributed anion effects on the retention of trivalent actinides in the environment'

## Description

La présente invention a pour objet un procédé de traitement d'apatites naturelles en vue de les utiliser pour le stockage d'éléments combustibles irradiés.

Dans le stockage direct des éléments combustibles irradiés, ceux-ci sont placés dans un conteneur de stockage avec des matériaux tels que du sable, des billes de verre etc. destinés à remplir les vides intérieurs entre les éléments. Le rôle de ces matériaux de remplissage est purement mécanique mais on pourrait profiter des propriétés physico-chimiques du matériau de remplissage pour améliorer la sécurité du stockage.

Dans ce but, on a envisagé l'utilisation comme matériau de remplissage de phosphates naturels de type apatite. Lors d'un éventuel accident, en particulier d'une entrée d'eau, la surface réactive de l'apatite jouera un rôle ralentisseur dans la migration des radioéléments issus des éléments de combustibles irradiés.

La capacité des apatites à fixer des éléments divers, en particulier des cations tels que le strontium, le cadmium, le césium, l'uranium et/ou des groupements anioniques tels que VO₄, UO₄, etc., est bien connue. Cette capacité est fortement liée à la composition chimique de la surface et à la surface spécifique du matériau. Ainsi, l'hydroxyapatite fixe mieux les cations et les anions que les apatites naturelles telles que la fluorapatite.

L'hydroxyapatite a pour formule :

Ca₁₀(PO₄)₆(OH)₂

avec un rapport atomique Ca/P de 1,667.

La structure tridimensionnelle de l'hydroxyapatite qui cristallise dans le système hexagonal, est bien connue. Il s'agit donc d'un composé bien identifié. Cependant, les différents procédés de préparation d'hydroxyapatite conduisent pour la plupart à des produits légèrement différents, comme il est décrit par R.A. Young et D.W. Holcomb dans Calcif Tissue Int., 1982, 34, p. 17-32.

Aussi, on peut décrire l'hydroxyapatite synthétique non stoechiométrique par la formule chimique plus détaillée

Ca₁₀₋ₓ(HPO₄)ₓ(PO₄)₆₋ₓ(OH)₂₋ₓ

Dans les composés répondant à cette formule il existe des lacunes dans les sites calcium et dans les sites hydroxyle. Elles s'accompagnent de la substitution des groupements phosphate PO₄³⁻ par les groupements hydrogénophosphate (HPO₄)²⁻.

Dans les apatites naturelles, le calcium est souvent substitué par du magnésium ou un autre élément bivalent tel qu'un métal alcalinoterreux; le phosphate peut être également substitué par du carbonate, et l'ion hydroxyle peut être lui aussi substitué par des halogènes comme dans le cas de la fluoroapatite.

Les phosphates de calcium naturels à structure apatitique sont nombreux mais ils présentent des propriétés de fixation moins bonnes que celles des hydroxyapatites synthétiques. En revanche, ils ont l'avantage d'être très bon marché et d'être disponibles en quantité illimitée.

Aussi, le traitement d'apatites naturelles en vue d'améliorer leurs propriétés de fixation et de les rendre aussi performantes que les hydroxyapatites synthétiques serait d'un grand intérêt.

Le document FR-A- 2 678 258 décrit un procédé de traitement d'apatites naturelles, notamment d'origine biologique, en vue d'obtenir à partir de celles-ci de l'hydroxyapatite ou du phosphate tricalcique.

Selon ce procédé, on transforme tout d'abord l'apatite naturelle en phosphate bicalcique par traitement avec un acide fort tel que HCl 1N, puis on traite le phosphate bicalcique au moyen d'une base ou on dissout totalement le phosphate bicalcique dans l'acide phosphorique et on traite la liqueur obtenue par une base, pour obtenir dans les deux cas l'hydroxyapatite.

Selon l'invention, on a trouvé qu'un traitement beaucoup plus simple suffisait pour améliorer les propriétés d'une apatite naturelle afin de les rendre très proches de celles de l'hydroxyapatite synthétique précipitée.

Aussi, la présente invention a pour objet l'utilisation comme matériau de remplissage dans un conteneur de stockage d'éléments combustibles irradiés ou comme barrière chimique dans le conditionnement d'un déchet nucléaire, d'une apatite naturelle traitée en vue d'améliorer sa surface spécifique, sa réactivité de surface et ses propriétés de fixation des cations et des anions, en modifiant sa composition pour la rendre très proche de celle de l'hydroxyapatite.

Selon l'invention, le procédé de traitement d'une apatite naturelle consiste à mettre en contact une poudre de cette apatite avec une solution aqueuse acide ayant un pH supérieur à 1 pendant quelques secondes à 10 minutes.

Ce traitement consiste ainsi à réaliser une lixiviation acide très légère de l'apatite naturelle, au moyen d'une solution faiblement acide, pendant une durée très courte, ce qui est totalement différent de la dissolution acide mise en oeuvre dans FR-A-2 678 258 qui conduit à du phosphate bicalcique Ca(HPO₄).

Ce traitement permet notamment :
- d'éliminer la partie gangue restante, en particulier les carbonates (calcite et dolomie),
- d'éliminer les particules les plus fines, les plus rapidement dissoutes,
- de désorber les ions absorbés en surface,
- de créer des groupements HPO₄⁻ qui sont favorables à la fixation cationique et qui contribuent à la réactivité de surface, et
- de modifier la composition de la surface de l'apatite pour la rendre proche de celle de l'hydroxyapatite.

Les solutions aqueuses acides utilisées pour ce traitement peuvent être constituées par de l'acide chlorhydrique dilué ou de l'acide nitrique dilué ; elles ont de préférence un pH de 1 à 4.

A titre d'exemple, on peut utiliser de l'acide nitrique dilué contenant 7% en volume de HNO₃.

Les apatites naturelles susceptibles d'être traitées par le procédé de l'invention peuvent être de n'importe quel type. Généralement, on utilise une apatite naturelle d'origine géologique telle que la dahlite ou la francolite.

Pour mettre en oeuvre ce traitement, on part d'une apatite naturelle que l'on met sous la forme de poudre. Ceci peut être effectué par broyage de l'apatite naturelle suivi d'un lavage à l'eau et d'un séchage à une température inférieure à 100°C, par exemple par ventilation sèche ou à l'étuve.

On introduit ensuite la poudre d'apatite ainsi traitée dans un bain d'acide dilué pendant une durée très brève, généralement de quelques secondes à 10 minutes, puis on la sépare du bain, par exemple par filtration. De préférence, on la soumet ensuite à un rinçage à l'eau et à un sèchage comme précédemment.

Après ce traitement, la poudre peut être utilisée directement pour remplir les vides d'un conteneur de stockage dans lequel sont introduits des éléments de combustibles irradiés, en prenant soin de bien compacter les grains de poudre afin de ménager le minimum de vide dans le conteneur.

Dans le conteneur, l'existence d'une température faible (250°C) mais constante, permet une diffusion ionique lente qui conduira à l'introduction progressive des ions fixés en surface à l'intérieur du réseau de l'apatite.

Bien entendu, on peut utiliser la poudre ainsi modifiée dans d'autres domaines que celui du stockage des éléments combustibles irradiés, par exemple en tant que barrière chimique dans le conditionnement de tout déchet nucléaire où ses propriétés de fixation seront également mises à profit.

Les exemples suivants illustrent le procédé de l'invention.

### Exemple 1.

Dans cet exemple, on part d'une apatite naturelle du type dahlite de formule Ca₁₀ (PO₄,CO₃)(OH)_{2-y} et on la broie à une granulométrie de 100 à 150µm. On lave ensuite la poudre à l'eau claire de façon à éliminer les particules fines et on la sèche à une température de 80°C avec de l'air chaud. On fait subir ensuite à la poudre une attaque chimique dans un bain d'acide dilué constitué d'acide nitrique à 7%, à la température ambiante (20 +5°C) pendant 30 à 40s. On sépare ensuite la poudre du bain par filtration et on la rince à l'eau claire et on la sèche dans les mêmes conditions que précédemment.

On obtient ainsi une poudre présentant des propriétés de fixation des cations nettement meilleures que celles de la poudre de départ.

### Exemple 2.

Dans cet exemple, on suit le même mode opératoire que dans l'exemple 1 pour traiter une apatite naturelle du type francolite de formule Ca₁₀(PO₄, CO₃)₆F_{2-y} du Maroc qui a une structure peu favorable, analogue à celle de la fluorapatite.

A la fin du traitement, on constate que l'on multiplie le coefficient d'absorption physicochimique de cette apatite par un facteur voisin de 4 par unité de poids.

Ainsi, l'invention est très avantageuse car elle permet par un traitement très léger, d'améliorer de façon importante les propriétés d'une apatite naturelle, pour l'utiliser dans diverses applications, en particulier pour le stockage d'éléments combustibles irradiés.

## Revendications

1. Utilisation d'une poudre d'apatite obtenue par mise en contact d'une poudre d'apatite naturelle avec une solution aqueuse acide ayant un pH supérieur à 1 pendant quelques secondes à 10 minutes, comme matériau de remplissage dans un conteneur de stockage d'éléments combustibles nucléaires irradiés ou comme barrière chimique dans le conditionnement d'un déchet nucléaire.

2. Utilisation selon la revendication 1, caractérisée en ce que le pH de la solution aqueuse acide est de 1 à 4.

3. Utilisation selon l'une quelconque des revendications 1 et 2, caractérisée en ce que la solution aqueuse acide est une solution d'acide chlorhydrique ou d'acide nitrique.

4. Utilisation selon l'une quelconque des revendications 1 à 3, caractérisée en ce que l'apatite naturelle est la dahlite ou la francolite.

5. Utilisation selon l'une quelconque des revendications 1 à 4, caractérisée en ce que la poudre d'apatite naturelle est obtenue par broyage d'une apatite naturelle, suivi d'un lavage à l'eau et d'un séchage.

6. Utilisation selon l'une quelconque des revendications 1 à 5, caractérisée en ce que la poudre d'apatite naturelle traitée par la solution aqueuse acide est ensuite soumise à un lavage à l'eau et à un séchage, avant d'être utilisée comme matériau de remplissage dans un conteneur de stockage d'éléments combustibles nucléaires irradiés.

## Claims

1. Use of an apatite powder obtained by contacting a natural apatite powder with an aqueous acid solution having a pH exceeding 1 for a few seconds to 10 minutes, as the filling material in a storage container for irradiated nuclear fuel elements or as a chemical barrier in the conditioning of a nuclear waste.

2. Use according to claim 1, characterized in that the pH of the acid aqueous solution is between 1 and 4.

3. Use according to either of the claims 1 and 2, characterized in that the acid aqueous solution is a nitric acid or hydrochloric acid solution.

4. Use according to any one of the claims 1 to 3, characterized in that the natural apatite is dahlite or francolite.

5. Use according to any one of the claims 1 to 4, characterized in that the natural apatite powder is obtained by crushing a natural apatite, followed by washing with water and drying.

6. Use according to any one of the claims 1 to 5, characterized in that the natural apatite powder treated by the acid aqueous solution then undergoes washing with water and drying before being used as a filling material for a storage container for irradiated nuclear fuel elements.

## Patentansprüche

1. Verwendung eines Apatitpulvers, erhalten durch in Berührung bringen eines natürlichen Apatitpulvers mit einer sauren wäßrigen Lösung, die einen pH oberhalb von 1 aufweist, während einiger Sekunden bis zu 10 Minuten, als Füllmaterial in einem Lager-Container für bestrahlte Kernbrennelemente oder als chemische Barriere in der Verpackung von Nuklearabfall.

2. Verwendung nach Anspruch 1, dadurch gekennzeichnet, daß der pH der wäßrigen sauren Lösung 1 bis 4 beträgt.

3. Verwendung nach einem der Ansprüche 1 und/oder 2, dadurch gekennzeichnet, daß die saure wäßrige Lösung eine Salzsäurelösung oder eine Salpetersäurelösung ist.

4. Verwendung nach einem oder mehreren der Ansprüche 1 bis 3, dadurch gekennzeichnet, daß das natürliche Apatit Dahlit oder Francolit ist.

5. Verwendung nach einem oder mehreren der Ansprüche 1 bis 4, dadurch gekennzeichnet, daß das natürliche Apatit durch Zerkleinern eines natürlichen Apatits, gefolgt von einem Waschen mit Wasser und einem Trocknen erhalten wird.

6. Verwendung nach einem oder mehreren der Ansprüche 1 bis 5, dadurch gekennzeichnet, daß das natürliche Apatitpulver, das durch die saure wäßrige Lösung behandelt wird, darauf folgend einem Waschen mit Wasser und einem Trocknen unterzogen wird, bevor es als Füllmaterial in einem Lager-Container für bestrahlte Kernbrennelemente verwendet wird.
